# EUROPÄISCHE PATENTSCHRIFT

(11) **EP 3 794 406 B1**
(45) Veröffentlichungstag und Bekanntmachung des Hinweises auf die Patenterteilung: **15.04.2026**
(21) Anmeldenummer: 19725938.5
(22) Anmeldetag: 10.05.2019
(51) Int. Cl.: G02C 5/22

(54) **GEHÄUSE FÜR EIN FEDERSCHARNIER EINER BRILLE, BRILLENTEIL MIT EINEM SOLCHEN GEHÄUSE, UND BRILLE MIT EINEM SOLCHEN BRILLENTEIL**
HOUSING FOR A SPRING HINGE OF EYEGLASSES, EYEGLASSES PART HAVING SUCH A HOUSING, AND EYEGLASSES HAVING SUCH AN EYEGLASSES PART
BOÎTIER POUR UNE CHARNIÈRE À RESSORT DE LUNETTES, PIÈCE DE LUNETTES AVEC UN TEL BOÎTIER, ET LUNETTES AVEC UNE TELLE PIÈCE DE LUNETTES

(30) Priorität: 15.05.2018 DE 102018111674
(43) Veröffentlichungstag der Anmeldung: 24.03.2021
(73) Patentinhaber: OBE GMBH & CO. KG, 75228 Ispringen (DE)
(72) Erfinder: WANNENMACHER, Ulrich, 75015 Bretten (DE); WIENICKE, Frank, 75217 Birkenfeld (DE)
(74) Vertreter: Kordel, Mattias
(86) Internationale Anmeldenummer: PCT/EP2019/062100
(87) Internationale Veröffentlichungsnummer: WO 2019/219547

(56) Entgegenhaltungen:
- EP-A1- 0 615 149
- EP-A1- 1 726 985
- WO-A1-2008/096251
- WO-A2-2008/087050
- FR-A1- 2 781 891

## Beschreibung

Die Erfindung betrifft ein Gehäuse für ein Federscharnier einer Brille, ein Brillenteil mit einem solchen Gehäuse, und eine Brille mit einem solchen Brillenteil.

Ein derartiges Gehäuse für ein Federscharnier für eine Brille weist einen Gehäusekörper auf, der eine Aufnahmeaussparung aufweist, die eingerichtet ist, um einen Federscharniermechanismus aufzunehmen. Das Gehäuse ist an einer Stirnseite des Gehäusekörpers zumindest bereichsweise offen, weist also an der Stirnseite zumindest eine mit der Aufnahmeaussparung kommunizierende Öffnung auf. Diese wenigstens eine Öffnung ist insbesondere vorgesehen für einen Durchgriff eines Teils des Federscharniermechanismus, insbesondere von wenigstens einem Scharnierauge des Federscharniermechanismus, um diesen gelenkig mit einem weiteren Scharnierteil zu verbinden. Die Aufnahmeaussparung weist entlang einer Längserstreckung des Gehäusekörpers von der mindestens einen Öffnung ausgehend bis zu einem der Stirnseite abgewandten Aufnahmeende einen Querschnitt auf, der zur Anordnung des Federscharniermechanismus geeignet ist.

Bei bekannten Federscharniergehäusen reicht der Gehäusekörper entlang der Längserstreckung in Richtung von der mindestens einen Öffnung weg weit über das Aufnahmeende hinaus. Insbesondere wenn die Aufnahmeaussparung mittels konventioneller Zerspanung in den Gehäusekörper eingebracht wird, entstehen durch die hierzu verwendeten, im Verhältnis zu dem feinmechanischen, relativ kleinen Gehäuse großen Werkzeuge, insbesondere Sägen und/oder Fräser, Bereiche, die ausschließlich einem Werkzeug-Auslauf dienen und keine weitere Funktion für das Federscharnier haben. Beispielsweise benötigen Sägen, welche lineare Führungsschlitze für den Federscharniermechanismus herstellen, einen Auslauf, dessen Länge deren Durchmesser entspricht. Dieser Auslauf dient aber nicht mehr der Aufnahme oder Führung des Mechanismus. Insbesondere weist die Aufnahmeaussparung in dem Bereich des Werkzeug-Auslaufs einen Querschnitt, insbesondere eine reduzierte Höhe, auf, die nicht mehr zur Anordnung des Federscharniermechanismus geeignet ist, sodass sich auch ein der Stirnseite abgewandtes Ende der Aufnahmeaussparung und/oder des Gehäusekörpers bis vergleichsweise weit jenseits des Aufnahmeendes erstreckt. Dies ist problematisch zum einen mit Blick auf einen unnötig hohen Materialeinsatz für das Gehäuse, zum anderen in Hinblick auf dessen ästhetische Anmutung, da das Gehäuse stets länger ausgebildet sein muss, als dies eigentlich für die Funktion des Federscharniers erforderlich ist. Nicht zuletzt ist hierdurch auch die Designfreiheit eingeschränkt.

Das Dokument WO 2008/087050 A2 beschreibt einen bekannten Federscharniermechanismus.

Der Erfindung liegt die Aufgabe zugrunde, ein Gehäuse der hier angesprochenen Art derart weiterzubilden, dass die genannten Nachteile nicht auftreten. Der Erfindung liegt weiterhin die Aufgabe zugrunde, ein Brillenteil mit einem solchen Gehäuse sowie eine Brille mit einem solchen Brillenteil zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Gehäuse der hier angesprochenen Art dadurch weitergebildet wird, dass der Gehäusekörper einstückig in einem Metallpulverspritzgussverfahren hergestellt ist.

Weiter ist gemäß einer Ausgestaltung der Erfindung vorgesehen, dass der Gehäusekörper entlang der Längserstreckung in einem Abstand von höchstens 1,15 mm hinter dem Aufnahmeende endet.

Zusätzlich ist gemäß einer weiteren Ausgestaltung der Erfindung vorgesehen, dass die Aufnahmeaussparung hinter dem Aufnahmeende in Längsrichtung durch eine Innenwandung begrenzt wird, die mit der Längserstreckung einen Winkel von mindestens 88° bis höchstens 92° einschließt.

Mithilfe des Metallpulverspritzgussverfahrens kann der Führungsbereich des Gehäuses vergleichsweise scharfkantig ausgebildet werden, insbesondere da die Aufnahmeaussparung beim Metallpulverspritzgießen ausgebildet wird, wobei es keiner zerspanenden Bearbeitung bedarf. Das Gehäuse kann so entsprechend kurz ausgebildet werden, ohne dass es zusätzlichen Materials für einen Werkzeugauslauf bedarf. Der Gehäusekörper kann daher vorteilhaft in kurzem Abstand zu dem Aufnahmeende enden, sodass das Gehäuse im Wesentlichen so lang oder nur unwesentlich länger ist, wie/als es für die Funktion des Federscharniermechanismus erforderlich ist. Die Aufnahmeaussparung kann durch eine im Vergleich zu konventionellen Gehäusen steile Innenwandung begrenzt sein, wodurch ebenfalls die Gehäuselänge effektiv verkürzt werden kann. Insbesondere ist es möglich, die Gehäuselänge auf ein Minimum zu reduzieren, sodass auch erhöhte Designfreiheiten im Hinblick auf das Gehäuse, das Brillenteil und die Brille geschaffen werden.

Besonders bevorzugt ist der Gehäusekörper, insbesondere das Gehäuse, frei von einem Werkzeugauslauf, der Gehäusekörper, insbesondere das Gehäuse, weist also keinen Werkzeugauslauf auf.

Bevorzugt ist das Gehäuse insgesamt einstückig in einem Metallpulverspritzgussverfahren hergestellt.

Vorzugsweise ist der Gehäusekörper, insbesondere das Gehäuse, aus Edelstahl, insbesondere aus hochfestem Edelstahl, gebildet.

Der Gehäusekörper endet vorzugsweise entlang der Längserstreckung in einem Abstand von höchstens 1,1 mm, vorzugsweise von höchstens 1,05 mm, vorzugsweise von höchstens 1 mm, vorzugsweise von höchstens 0,96 mm, vorzugsweise von höchstens 0,94 mm, hinter dem Aufnahmeende.

Unter einer Längserstreckung/Längsrichtung des Gehäusekörpers wird bevorzugt eine Richtung der längsten Erstreckung des Gehäusekörpers verstanden, und/oder eine Wirkrichtung des Federscharniermechanismus, insbesondere eine Richtung, entlang derer ein Bügelteil des Federscharniermechanismus bestimmungsgemäß verlagert und/oder ein Federelement des Federscharniermechanismus in dem Gehäuse je nach Betätigung des Federscharniermechanismus gestaucht oder gedehnt wird.

Dass die Aufnahmeaussparung hinter dem Aufnahmeende in Längsrichtung durch die Innenwandung begrenzt wird, bedeutet, dass die Aufnahmeaussparung auf einer der Stirnseite entlang der Längserstreckung des Gehäusekörpers abgewandten Seite durch die Innenwandung begrenzt wird.

Allgemein wird der Begriff "hinter" hier in dem Sinne verwendet, dass ein Element, welches "hinter" einem anderen Element angeordnet ist, einen größeren Abstand zu der Stirnseite in Richtung der Längserstreckung aufweist, als dasjenige Element, hinter welchem das Element angeordnet ist. In diesem Sinne endet der Gehäusekörper auch in dem angegebenen Abstand hinter dem Aufnahmeende, wobei er in einem größeren Abstand zu der Stirnseite endet, als es dem Abstand des Aufnahmeendes von der Stirnseite entspricht.

Die Aufnahmeaussparung wird durch die Innenwandung vorzugsweise unmittelbar hinter dem Aufnahmeende begrenzt, oder in einem Abstand von höchstens 0,4 mm, vorzugsweise von höchstens 0,35 mm hinter dem Aufnahmeende.

Die Innenwandung kann - entlang einer Richtung senkrecht zu der Längserstreckung gesehen - gerade oder abgerundet ausgebildet sein.

Besonders bevorzugt steht die Längserstreckung senkrecht auf der Innenwandung, sodass diese mit der Längserstreckung einen Winkel von 90° einschließt.

Unter einem Federscharniermechanismus wird allgemein ein Mechanismus verstanden, der in für sich genommen bekannter Weise ein Überdrücken eines Brillenbügels relativ zu einem Mittelteil einer Brille über eine Trageposition hinaus in eine Richtung weg von einer eingeklappten Ruhestellung erlaubt. Ein solcher Federscharniermechanismus weist bevorzugt ein in dem Gehäuse anordenbares Federelement sowie ein mit dem Federelement zusammenwirkendes Bügelteil auf, wobei das Bügelteil bestimmungsgemäß relativ zu dem Gehäuse verlagerbar gehalten und bereichsweise in dem Gehäuse angeordnet ist. Das Bügelteil ragt insbesondere mit wenigstens einem Scharnierauge aus der zumindest einen Öffnung an der Stirnseite des Gehäusekörpers in montiertem Zustand heraus. Vorzugsweise weist der Federscharniermechanismus ein U-förmiges Bügelteil mit zwei Schenkeln auf, wobei an jedem Schenkel jeweils ein Scharnierauge ausgebildet ist, und wobei das Federelement bestimmungsgemäß zwischen den Schenkeln des U-förmigen Bügelteils angeordnet ist. Das Federelement ist bevorzugt als separate, lose Druckfeder ausgebildet.

Dass die Aufnahmeaussparung entlang der Längserstreckung ausgehend von der mindestens einen Öffnung bis zu dem Aufnahmeende einen zur Anordnung des Federscharniermechanismus geeigneten Querschnitt aufweist, bedeutet insbesondere, dass eine senkrecht zur Längserstreckung gemessene Höhe und Breite der Aufnahmeaussparung in diesem Bereich groß genug sind, um den Federscharniermechanismus aufzunehmen. Es ist möglich, dass die Aufnahmeaussparung direkt an dem Aufnahmeende endet, insbesondere dass die Innenwandung, welche die Aufnahmeaussparung begrenzt, unmittelbar an dem Aufnahmeende angeordnet ist. Es ist aber auch möglich, dass sich die Aufnahmeaussparung über den Bereich des Aufnahmeendes hinaus fortsetzt, wobei dann insbesondere der Querschnitt, insbesondere die Höhe und/oder Breite der Aufnahmeaussparung zwischen dem Aufnahmeende und einem insbesondere durch die Innenwandung begrenzten Ende der Aufnahmeaussparung reduziert ist/sind, sodass der Federscharniermechanismus nur bis zu dem Aufnahmeende in die Aufnahmeaussparung eingebracht werden kann. Besonders bevorzugt weist die Aufnahmeaussparung - bis auf gegebenenfalls Funktionsaussparungen, beispielsweise zum Verriegeln des Federscharniermechanismus - eine konstante Höhe und/oder Breite von der mindestens einen Öffnung bis zu dem Aufnahmeende auf.

Gemäß Erfindung ist vorgesehen, dass der Gehäusekörper hinter dem Aufnahmeende eine Rückwand aufweist, die quer zu der Längserstreckung orientiert ist, wobei die Rückwand eine Wandstärke von höchstens 0,8 mm, vorzugsweise höchstens 0,75 mm, vorzugsweise höchstens 0,7 mm, vorzugsweise höchstens 0,65 mm, vorzugsweise höchstens 0,6 mm, vorzugsweise höchsten 0,59 mm, aufweist. Dass die Rückwand quer zu der Längserstreckung orientiert ist, bedeutet bevorzugt, dass sie schräg oder senkrecht zu der Längserstreckung orientiert ist, wobei sie bevorzugt mit der Längserstreckung einen Winkel von mindestens 88° bis höchstens 92° einschließt. Besonders bevorzugt ist die Rückwand senkrecht zu der Längserstreckung orientiert, die Längserstreckung steht also senkrecht auf der Rückwand. Die Rückwand bildet insbesondere die Innenwandung, welche die Aufnahmeaussparung begrenzt. Dass die Rückwand in dem hier genannten Winkelbereich, vorzugsweise senkrecht, zu der Längserstreckung orientiert ist, bedeutet insbesondere, dass das Gehäuse, insbesondere der Gehäusekörper, keinen Schrägauslauf, insbesondere keinen Werkzeugauslauf, aufweist.

Der Gehäusekörper weist die Rückwand vorzugsweise unmittelbar hinter dem Aufnahmeende auf, oder in einem in Längsrichtung gemessenen Abstand von höchstens 0,4 mm, vorzugsweise von höchstens 0,35 mm, von dem Aufnahmeende.

Die Rückwand weist eine entlang ihrer Höhe konstante Wandstärke auf.

Mit der quer, vorzugsweise senkrecht zu der Längserstreckung orientierten Rückwand kann das Gehäuse sehr kurz ausgebildet sein.

Gemäß Erfindung ist vorgesehen, dass der Gehäusekörper, vorzugsweise das Gehäuse, entlang der Längserstreckung eine Länge von höchstens 7,8 mm, vorzugsweise von höchstens 7,75 mm, vorzugsweise von höchstens 7,7 mm, vorzugsweise von höchstens 7,65 mm, vorzugsweise von höchstens 7,6 mm, aufweist. Das Gehäuse kann somit insgesamt sehr kurz ausgebildet sein und insbesondere eine für die Funktion des Federscharniermechanismus erforderliche, minimale Länge aufweisen.

Gemäß einer Weiterbildung der Erfindung ist vorgesehen, dass das Gehäuse an der Stirnseite eine Stirnwand aufweist, wobei die Stirnwand ihrerseits zwei mit der Aufnahmeaussparung korrespondierende Öffnungen aufweist, wobei diese zwei Öffnungen die zumindest eine mit der Aufnahmeaussparung kommunizierende Öffnung gemäß den vorangehenden Ausführungen sind, wobei zwischen den außermittig angeordneten beiden Öffnungen ein Stirnwandmittenabschnitt angeordnet ist, der als Widerlager für den Federscharniermechanismus ausgebildet ist. Das Gehäuse ist mit dem als Widerlager ausgebildeten Stirnwandmittenabschnitt insbesondere geeignet, um mit dem Federscharniermechanismus, insbesondere dem Bügelteil und dem Federelement, eine vormontierte Baugruppe zu bilden, insbesondere indem das Bügelteil und das Federelement gegen das Widerlager vorgespannt in dem Gehäuse angeordnet werden. Das Gehäuse ist dann in besonders einfacher Weise vormontiert an einem Brillenteil befestigbar, insbesondere durch Schweißen, bevorzugt durch Laserschweißen, insbesondere durch Wärmeleitungs-Nahtschweißen.

Dass die beiden Öffnungen außermittig angeordnet sind, bedeutet insbesondere, dass sie in Breitenrichtung des Gehäuses gesehen voneinander beabstandet und aus einer Mitte des Gehäusekörpers heraus versetzt, insbesondere symmetrisch zu einer Mittelebene des Gehäuses, in welcher die Längserstreckung verläuft, angeordnet sind. Die Breitenrichtung des Gehäuses erstreckt sich dabei senkrecht zu der Längserstreckung und insbesondere parallel zu einer gedachten Scharnierachse des Federscharniermechanismus. Eine Höhe des Gehäuses erstreckt sich insbesondere senkrecht zu der Längserstreckung und senkrecht zu der gedachten Scharnierachse des Federscharniermechanismus. Die Höhe des Gehäuses und die Längserstreckung spannen gemeinsam die zuvor angesprochene Mittelebene auf, auf der die Breitenrichtung senkrecht steht.

Gemäß einer Weiterbildung der Erfindung ist vorgesehen, dass eine Außenfläche einer Deckenwandung des Gehäusekörpers ausgehend von der Stirnseite in Richtung der Längserstreckung des Gehäusekörpers - von der Stirnseite weg nach hinten - abfällt. Die entsprechende Schrägfläche der Deckenwandung ermöglicht es, im Bereich der Stirnseite mehr Material anzuordnen, und so insbesondere den Stirnwandmittenabschnitt und damit das Widerlager für den Federmechanismus zu stärken. Bevorzugt weist das Gehäuse insgesamt, insbesondere der Gehäusekörper, eine nach hinten abfallende, leicht keilförmige Kontur auf.

Die Deckenwandung begrenzt die Aufnahmeaussparung nach oben. Der Gehäusekörper weist außerdem bevorzugt zwei Seitenwände auf, welche die Aufnahmeaussparung zur Seite begrenzen. Die bereits angesprochene Rückwand begrenzt die Aufnahmeaussparung nach hinten. Die Stirnwand begrenzt vorzugsweise die Aufnahmeaussparung nach vorne.

Gemäß einer Weiterbildung der Erfindung ist vorgesehen, dass die Außenfläche der Deckenwandung mit der Längserstreckung einen Winkel von mindestens 0,8° bis höchstens 1,2°, vorzugsweise von 1°, einschließt. Die Deckenwandung weist also eine leichte Keilform auf.

Vorzugsweise nimmt die Materialstärke der Deckenwandung von der Stirnseite aus gesehen nach hinten - vorzugsweise kontinuierlich - ab. Dies ergibt sich in Zusammenhang mit der abfallenden Außenfläche insbesondere dann, wenn die Innenhöhe der Aufnahmeaussparung - bis gegebenenfalls auf die bereits erwähnten Funktionsaussparungen - konstant ist.

Gemäß einer Weiterbildung der Erfindung ist vorgesehen, dass die Aufnahmeaussparung stirnseitig offen ist. In diesem Fall fehlt insbesondere der Stirnwandmittenabschnitt oder die Stirnwand. Diese Ausgestaltung des Gehäuses ist insbesondere geeignet, um mit einem Brillenteil durch Löten verbunden zu werden. Beim Löten als Befestigungsverfahren kommt nämlich eine Vormontage des Federscharniermechanismus im Gehäuse nicht infrage, da der Wärmeeintrag in dem Sinne zu hoch ist, dass der Federmechanismus beim Löten beschädigt, insbesondere das Federelement ausgeglüht würde. Es wird daher in diesem Fall zunächst das Gehäuse auf das Brillenteil gelötet, wobei danach der Federmechanismus in der Aufnahmeaussparung angeordnet wird. Hierzu ist die Aufnahmeaussparung stirnseitig offen, sodass der Federmechanismus in die Aufnahmeaussparung von der Stirnseite her eingeführt werden kann. Da es in diesem Fall an dem insbesondere einstückig mit dem Gehäusekörper ausgebildeten Widerlager fehlt, muss ein separates Verschlussteil vorgesehen sein, das vorzugsweise in montiertem Zustand in einer Rastaussparung in der Deckenwandung des Gehäusekörpers einrastet und sich somit in dieser Rastaussparung abstützt. Solche Ausgestaltungen sind für sich genommen bekannt, sodass insofern nicht näher hierauf eingegangen wird.

Gemäß einer Weiterbildung der Erfindung ist vorgesehen, dass der Gehäusekörper an der Stirnseite eine Mittenvertiefung aufweist, in deren Bereich ein Anspritzpunkt für die Herstellung des Gehäusekörpers angeordnet ist. Im Bereich der Mittenvertiefung springt die Oberfläche der Stirnseite nach hinten zurück, sodass hier in montiertem Zustand eines Federscharniers kein Kontakt eines Gegen-Scharnierteils mit dem Gehäuse gegeben ist. Wird der Anspritzpunkt in der Mittenvertiefung angeordnet, stören eventuell vom Abtrennen des Angusses übrig bleibende Materialreste und Störkonturen die Funktionsweise des fertigen Federscharniers nicht. Nocken des Gegen-Scharnierteils laufen bevorzugt seitlich neben der Mittenvertiefung an der Stirnseite des Gehäuses ab.

Vorzugsweise ist zum Metallpulver-Spritzgießen des Gehäuses nur ein Anspritzpunkt vorgesehen, wobei dieser im Bereich der Mittenvertiefung angeordnet ist.

Die Mittenvertiefung ist insbesondere als Rücksprung in der Stirnseite ausgebildet. Vorzugsweise ist die Mittenvertiefung als Zylinderwandabschnitt ausgebildet, wobei eine Achse des gedachten Zylinders in Hochrichtung des Gehäusekörpers, also senkrecht zur Längserstreckung und senkrecht zur Breitenrichtung, orientiert ist.

Weist das Gehäuse den Stirnwandmittenabschnitt auf, ist die Mittenvertiefung bevorzugt an einer Außenseite des Stirnwandmittenabschnitts ausgebildet.

Ist dagegen die Aufnahmeaussparung stirnseitig offen, ist die Mittenvertiefung bevorzugt stirnseitig an der Deckenwandung ausgebildet.

Die Aufgabe wird schließlich auch gelöst, indem ein Brillenteil geschaffen wird, welches ein erfindungsgemäßes Gehäuse oder ein Gehäuse nach einem der zuvor beschriebenen Ausführungsbeispiele aufweist. In Zusammenhang mit dem Brillenteil verwirklichen sich insbesondere die Vorteile, die bereits in Zusammenhang mit dem Gehäuse erläutert wurden.

Der Gehäusekörper ist vorzugsweise an dem Brillenteil durch Laserschweißen befestigt. Dies ist ganz besonders bevorzugt der Fall bei einem Gehäuse, welches an der Stirnseite die Stirnwand mit Stirnwandmittenabschnitt aufweist.

Alternativ ist bevorzugt der Gehäusekörper an dem Brillenteil durch Löten befestigt. Dies ist insbesondere der Fall bei einem Gehäuse, bei dem die Aufnahmeaussparung stirnseitig offen ist.

Das Brillenteil ist vorzugsweise als Brillenbügel oder alternativ als Mittelteil einer Brille ausgebildet. Besonders bevorzugt ist das Brillenteil als Brillenbügel ausgebildet.

Gemäß einer Weiterbildung der Erfindung ist vorgesehen, dass der Gehäusekörper durch Laserschweißen an dem Brillenteil befestigt ist, wobei Laserschweißnähte ausschließlich an den Seitenwänden des Gehäuses angeordnet sind. Insbesondere ist das Gehäuse beidseitig im Bereich der Unterkanten der Seitenwände mit dem Brillenteil verschweißt. Dies genügt für eine stabile Befestigung des Gehäuses an dem Brillenteil.

Alternativ ist es möglich, dass Laserschweißnähte ausschließlich an den Seitenwänden und an der Rückwand des Gehäusekörpers ausgebildet sind. In diesem Fall ist das Gehäuse in an dem Brillenteil montierten Zustand auch im Bereich der Rückwand geschlossen, sodass es besonders effizient vor Verschmutzung oder Eindringen von Feuchtigkeit geschützt ist.

Die Stirnwand des Gehäusekörpers ist bevorzugt frei von Laserschweißnähten. Es ist demnach bevorzugt keine Laserschweißnaht im Bereich der Stirnwand angeordnet. Bei dem hier vorgeschlagenen Gehäuse kann gleichwohl der als Widerlager dienende Stirnwandmittenabschnitt stabil genug gefertigt sein, um die bei Gebrauch des Federscharniermechanismus wirkenden Kräfte aufzunehmen, insbesondere wenn das Gehäuse, insbesondere der Gehäusekörper, aus einem hochfesten Edelstahl gebildet ist. Weiterhin kann die nach hinten abfallende Außenfläche der Deckenwandung dazu beitragen, dass eine hinreichende Materialstärke für den Gehäusekörper im Bereich des Widerlagers vorhanden ist, was dessen Widerstandskraft zusätzlich erhöht. Dass im Bereich der Stirnwand keine Laserschweißnaht vorgesehen wird, führt wiederum zu einer besonders einfachen, schnellen und kostengünstigen Befestigung des Gehäuses an dem Brillenteil.

Die Aufgabe wird schließlich auch gelöst, indem eine Brille geschaffen wird, die ein erfindungsgemäßes Brillenteil oder ein Brillenteil gemäß einem der zuvor beschriebenen Ausführungsbeispiele aufweist. In Zusammenhang mit der Brille ergeben sich insbesondere die Vorteile, die zuvor bereits in Zusammenhang mit dem Gehäuse einerseits und dem Brillenteil andererseits erläutert wurden.

Vorzugsweise weist die Brille zwei erfindungsgemäße Brillenteile oder zwei Brillenteile nach einem oder mehreren der zuvor beschriebenen Ausführungsbeispiele auf. Insbesondere weist die Brille bevorzugt zwei erfindungsgemäße Gehäuse oder zwei Gehäuse nach einem oder mehreren der zuvor beschriebenen Ausführungsbeispiele auf.

Die Gehäusevariante, welche die Stirnwand und den Stirnwandmittenabschnitt aufweist, sowie die andere Gehäusevariante, bei der die Aufnahmeaussparung stirnseitig offen ist, können bevorzugt im selben Spritzgusswerkzeug hergestellt werden, wobei zur Herstellung der stirnseitig offenen Variante ein Werkzeugeinsatz verwendet werden kann, durch den das ansonsten für die Stirnwand und/oder den Stirnwandmittenabschnitt vorhandene Gussvolumen gesperrt wird.

Wegen der Mittenvertiefung läuft ein Schnappnocken eines dreilappigen Scharnierteils einer Brille, das als Gegen-Scharnierteil wirkt, bei dem hier vorgeschlagenen Gehäuse nur auf den beiden äußeren Lappen an der Stirnseite des Gehäuses ab.

Die Erfindung wird im Folgenden anhand der Zeichnung näher erläutert. Dabei zeigen:
- Figur 1: eine Darstellung eines ersten Ausführungsbeispiels eines Gehäuses für ein Federscharnier einer Brille aus einer ersten Blickrichtung;
- Figur 2: eine zweite Darstellung des ersten Ausführungsbeispiels des Gehäuses gemäß Figur 1 aus einer zweiten Blickrichtung;
- Figur 3: eine dritte Darstellung des ersten Ausführungsbeispiels des Gehäuses gemäß den Figuren 1 und 2 in einer Ansicht von unten, und
- Figur 4: eine Darstellung eines zweiten Ausführungsbeispiels eines Gehäuses für ein Federscharnier.

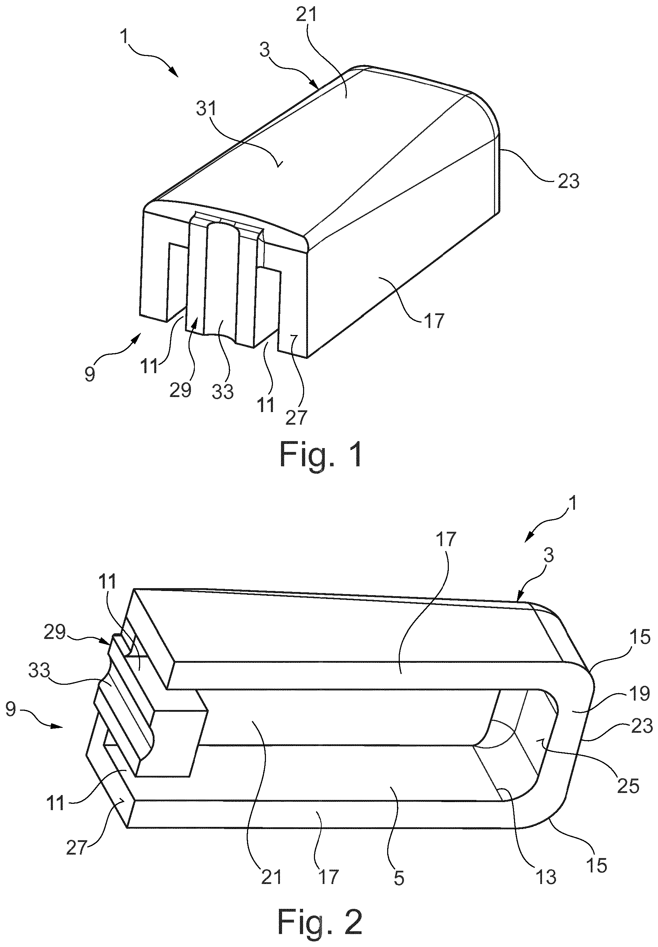

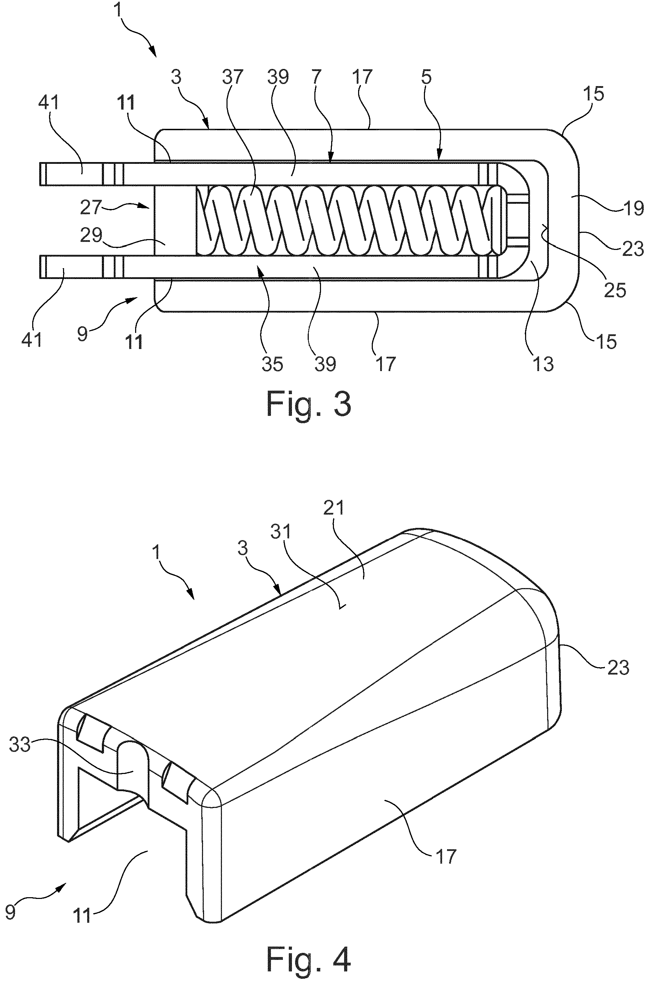

**Fig. 1** zeigt ein erstes Ausführungsbeispiel eines Gehäuses 1 für ein Federscharnier einer Brille, wobei das Gehäuse 1 einen Gehäusekörper 3 mit einer in Figur 2 erkennbaren Aufnahmeaussparung 5 aufweist. Die Aufnahmeaussparung 5 dient der Aufnahme eines in Figur 3 dargestellten Federscharniermechanismus 7.

Wie wiederum in Figur 1 dargestellt, weist das Gehäuse 1 an einer Stirnseite 9 des Gehäusekörpers 3 zumindest eine mit der Aufnahmeaussparung 5 kommunizierende Öffnung 11, hier zwei Öffnungen 11 auf.

Wiederum in Figur 2 ist erkennbar, dass die Aufnahmeaussparung 5 entlang einer Längserstreckung des Gehäusekörpers 3 von der mindestens einen Öffnung 11 bis zu einem der Stirnseite 9 abgewandten Aufnahmeende 13 einen zur Anordnung des Federscharniermechanismus 7 geeigneten Querschnitt aufweist. Entlang der Längserstreckung gesehen hinter dem Aufnahmeende 13 verringert sich der Querschnitt der Aufnahmeaussparung, im vorliegenden Fall insbesondere durch abgerundete Ecken 15, über welche Seitenwände 17 des Gehäusekörpers 3 in eine Rückwand 19 übergehen, aber auch durch eine Abrundung, über welche eine Deckenwandung 21 in die Rückwand 19 übergeht.

Der Gehäusekörper 3 ist einstückig in einem Metallpulverspritzgussverfahren hergestellt, vorzugsweise aus Edelstahl, insbesondere aus einem hochfesten Edelstahl.

Der Gehäusekörper 3 endet entlang der Längserstreckung in einem Abstand von höchstens 1,15 mm, vorzugsweise von höchstens 1,1 mm, vorzugsweise von höchstens 1,05 mm, vorzugsweise von höchstens 1 mm, vorzugsweise von höchstens 0,96 mm, vorzugsweise von höchstens 0,94 mm, hinter dem Aufnahmeende 13 mit einem Gehäusekörperende 23. Alternativ oder zusätzlich wird die Aufnahmeaussparung 5 hinter dem Aufnahmeende 13 in Längsrichtung durch eine Innenwandung 25 begrenzt, die mit der Längserstreckung einen Winkel von mindestens 88° bis höchstens 92°, vorzugsweise 90° einschließt.

Das Gehäuse 1 ist somit sehr kurz ausgebildet und weist insbesondere nur eine Länge auf, die für die Funktionsweise des Federscharniermechanismus 7 nötig ist.

Die Rückwand 19, die der Gehäusekörper 3 hinter dem Aufnahmeende 13 aufweist, ist bevorzugt quer, insbesondere mit einem Winkel von mindestens 88° bis höchstens 92°, vorzugsweise senkrecht, zu der Längserstreckung orientiert. Die Rückwand 19 weist bevorzugt eine Wandstärke von höchstens 0,8 mm, vorzugsweise von höchstens 0,75 mm, vorzugsweise von höchstens 0,7 mm, vorzugsweise von höchstens 0,65 mm, vorzugsweise von höchstens 0,59 mm, auf.

Der Gehäusekörper 3 weist entlang der Längserstreckung eine Länge von höchstens 7,8 mm, vorzugsweise von höchstens 7,75 mm, vorzugsweise von höchstens 7,7 mm, vorzugsweise von höchstens 7,65 mm, vorzugsweise von höchstens 7,6 mm, auf.

Insbesondere anhand von Figur 1 wird wiederum deutlich, dass das Gehäuse 1 an der Stirnseite 9 bevorzugt eine Stirnwand 27 aufweist, wobei zwischen den zwei in der Stirnwand 27 ausgebildeten Öffnungen 11 ein Stirnwandmittenabschnitt 29 ausgebildet ist, der als Widerlager für den Federscharniermechanismus 7 dient. Dieses derart ausgebildete, erste Ausführungsbeispiel des Gehäuses 1 wird bevorzugt an ein Brillenteil angeschweißt, insbesondere mittels Laserschweißen. Dabei kann der Federscharniermechanismus 7 in der Aufnahmeaussparung 5 insbesondere dadurch vormontiert werden, dass er sich an dem als Widerlager dienenden Stirnwandmittenabschnitt 29 abstützt.

Laserschweißnähte werden beim Verschweißen des Gehäusekörpers 3 dieses ersten Ausführungsbeispiels mit einem Brillenteil bevorzugt nur an den Seitenwänden 17, oder nur an den Seitenwänden 17 und an der Rückwand 19, ausgebildet. Die Stirnwand 27 bleibt demgegenüber vorzugsweise frei von einer Laserschweißnaht.

Das Gehäuse 1 wird vorzugsweise an einem als Brillenbügel oder als Mittelteil einer Brille ausgebildeten Brillenteil befestigt.

Eine Außenfläche 31 der Deckenwandung 21 fällt ausgehend von der Stirnseite 9 in Richtung der Längserstreckung des Gehäusekörpers 3 ab. Auf diese Weise kann die Materialstärke insbesondere im Bereich des Stirnwandmittenabschnitts 29 erhöht und dieser somit stabilisiert werden. Das Widerlager für den Federmechanismus 7 kann insbesondere dann ausreichend stabil sein, selbst wenn in diesem Bereich keine Fixierung durch eine Laserschweißnaht gegeben ist.

Bei dem hier dargestellten, ersten Ausführungsbeispiel weist der Stirnwandmittenabschnitt 29 an seiner Außenseite eine Mittenvertiefung 33 auf, die hier insbesondere die Form eines Zylinderwandabschnitts hat, wobei die gedachte Zylinderachse sich in Hochrichtung des Gehäuses 1 erstreckt. Ein Anspritzpunkt zur Herstellung des Gehäuses 1 ist insbesondere innerhalb dieser Mittenvertiefung 33 angeordnet.

**Fig. 2** zeigt - wie bereits ausgeführt - eine weitere Ansicht des ersten Ausführungsbeispiels des Gehäuses 1. Gleiche und funktionsgleiche Elemente sind in allen Figuren mit gleichen Bezugszeichen versehen, sodass insoweit jeweils auf die vorangegangene Beschreibung verwiesen wird.

In Figur 2 sind besonders gut die Aufnahmeaussparung 5, die mit dieser kommunizierenden Öffnungen 11 sowie der Stirnwandmittenabschnitt 29 zu erkennen.

**Fig. 3** zeigt eine Ansicht des ersten Ausführungsbeispiels des Gehäuses 1 von unten. Dabei ist hier - wie bereits erwähnt - auch der Federmechanismus 7 dargestellt, der ein Bügelteil 35 und ein Federelement 37 aufweist. Das Bügelteil 35 ist dabei insbesondere U-förmig mit zwei Schenkeln 39 ausgebildet, wobei das Federelement 37 zwischen den Schenkeln 39 des Bügelteils 35 angeordnet ist. Das Bügelteil 35 ragt mit zwei Scharnieraugen 41 durch die Öffnungen 11 aus dem Gehäuse 1, hier insbesondere aus der Aufnahmeaussparung 5, heraus. Das Federelement 37 stützt sich an dem Stirnwandmittenabschnitt 29 als Widerlager ab.

In Figur 3 ist gut erkennbar, dass der Federscharniermechanismus 7 nur bis zu dem Aufnahmeende 13 in die Aufnahmeaussparung 5 hineinragt, wobei die Rückwand 19 und insbesondere die Innenwandung 25 hier in einem Abstand zu dem Aufnahmeende 13 und damit zu dem Federscharniermechanismus 7 angeordnet ist. Es ist aber auch eine Ausgestaltung des Gehäuses 1 derart möglich, dass die Innenwandung 25 unmittelbar an dem Aufnahmeende 13 angeordnet ist, sodass der Federscharniermechanismus 7 in unbelastetem, entspanntem oder vorgespanntem Zustand an der Innenwandung 25 anschlägt.

**Fig. 4** zeigt eine Darstellung eines zweiten Ausführungsbeispiels des Gehäuses 1. Dabei unterscheidet sich dieses zweite Ausführungsbeispiel von dem ersten Ausführungsbeispiel gemäß den Figuren 1 bis 3 dadurch, dass die Aufnahmeaussparung 5 hier stirnseitig offen ist, wobei insbesondere der Stirnwandmittenabschnitt 29 nicht vorhanden ist. Diese Ausgestaltung des Gehäuses 1 ist insbesondere vorgesehen, um mit einem Brillenteil verlötet zu werden. Dabei kann der Federscharniermechanismus 7 nach dem Löten des Gehäusekörpers 3 auf ein Brillenteil durch die offene Stirnseite 9 in die Aufnahmeaussparung 5 eingeführt werden.

Bei diesem Ausführungsbeispiel ist die Mittenvertiefung 33 stirnseitig an der Deckenwandung 21 angeordnet. Auch in diesem Fall ist der Anspritzpunkt zur Herstellung des Gehäuses 1 in der Mittenvertiefung 33 angeordnet.

Das Gehäuse 1 ist bevorzugt Teil einer Brille, die insbesondere ein Brillenteil aufweist, an dem der Gehäusekörper 3 befestigt ist.

## Patentansprüche

1. Gehäuse (1) für ein Federscharnier einer Brille, mit
- einem Gehäusekörper (3), der eine Aufnahmeaussparung (5) zur Aufnahme eines Federscharniermechanismus (7) in der Aufnahmeaussparung (5) aufweist, wobei
- das Gehäuse (1) an einer Stirnseite (9) des Gehäusekörpers (3) zumindest eine mit der Aufnahmeaussparung (5) kommunizierende Öffnung (11) aufweist, wobei
- die Aufnahmeaussparung (5) entlang einer Längserstreckung des Gehäusekörpers (3) von der mindestens einen Öffnung (11) bis zu einem der Stirnseite (9) abgewandten Aufnahmeende (13) einen zur Anordnung des Federscharniermechanismus (7) geeigneten Querschnitt aufweist, wobei
- sich der Querschnitt der Aufnahmeaussparung (5) hinter dem Aufnahmeende (13) verringert, wobei
- der Gehäusekörper (3) einstückig in einem Metallpulver-Spritzgussverfahren hergestellt ist, wobei
- der Gehäusekörper (3) entlang der Längserstreckung in einem Abstand von höchstens 1,15 mm hinter dem Aufnahmeende (13) endet, wobei
- der Gehäusekörper (3) entlang der Längserstreckung eine Länge von höchstens 7,8 mm aufweist, wobei
- der Gehäusekörper (3) hinter dem Aufnahmeende (13) eine Rückwand (19) aufweist, die quer zu der Längserstreckung orientiert ist, wobei die Rückwand (19) eine Wandstärke von höchstens 0,8 mm aufweist, wobei der Gehäusekörper die Rückwand in einem in Längsrichtung gemessenen Abstand von höchstens 0,4 mm von dem Aufnahmeende (13) aufweist, und wobei die Rückwand eine entlang ihrer Höhe konstante Wandstärke aufweist.

2. Gehäuse (1) nach Anspruch 1, **dadurch gekennzeichnet, dass** die Aufnahmeaussparung (5) hinter dem Aufnahmeende (13) in Längsrichtung durch eine Innenwandung (25) begrenzt ist, die mit der Längserstreckung einen Winkel von mindestens 88° bis höchstens 92° einschließt.

3. Gehäuse (1) nach einem der vorhergehenden Ansprüche, **dadurch gekennzeichnet, dass** die Rückwand (19) senkrecht zu der Längserstreckung orientiert ist.

4. Gehäuse (1) nach einem der vorhergehenden Ansprüche, **dadurch gekennzeichnet, dass** das Gehäuse (1) an der Stirnseite (9) eine Stirnwand (27) aufweist, mit zwei mit der Aufnahmeaussparung (5) kommunizierenden Öffnungen (11), wobei zwischen den außermittig angeordneten zwei Öffnungen (11) ein Stirnwandmittenabschnitt (29) angeordnet ist, der als Widerlager für den Federscharniermechanismus (7) ausgebildet ist.

5. Gehäuse (1) nach einem der vorhergehenden Ansprüche, **dadurch gekennzeichnet, dass** eine Außenfläche (31) einer Deckenwandung (21) des Gehäusekörpers (3) ausgehend von der Stirnseite (9) in Richtung der Längserstreckung des Gehäusekörpers (3) abfällt.

6. Gehäuse (1) nach einem der Ansprüche 1 bis 3 oder 5, **dadurch gekennzeichnet, dass** die Aufnahmeaussparung (5) stirnseitig offen ist.

7. Gehäuse (1) nach einem der vorhergehenden Ansprüche, **dadurch gekennzeichnet, dass** der Gehäusekörper (3) an der Stirnseite (9) eine Mittenvertiefung (33) aufweist, in deren Bereich ein Anspritzpunkt für die Herstellung des Gehäusekörpers (3) angeordnet ist.

8. Brillenteil, mit einem Gehäuse (1) nach einem der Ansprüche 1 bis 7, wobei vorzugsweise der Gehäusekörper (3) an dem Brillenteil
a) durch Laserschweißen, oder
b) durch Löten
befestigt ist.

9. Brillenteil nach Anspruch 8, **dadurch gekennzeichnet, dass** der Gehäusekörper (3) an dem Brillenteil durch Laserschweißen befestigt ist, wobei Laserschweißnähte nur an Seitenwänden (17), oder nur an Seitenwänden (17) und an der Rückwand (19), des Gehäusekörpers (3) ausgebildet sind.

10. Brille, mit wenigstens einem Brillenteil nach einem der Ansprüche 8 oder 9.

## Claims

1. Housing (1) for a spring hinge of spectacles, comprising
- a housing body (3) having a receptacle recess (5) for receiving a spring hinge mechanism (7) in the receptacle recess (5), wherein
- the housing (1) has at least one opening (11) on a front face (9) of the housing body (3) which communicates with the receptacle recess (5), wherein
- the receptacle recess (5) has a cross-section suitable for arranging the spring hinge mechanism (7) along a longitudinal extension of the housing body (3) from the at least one opening (11) to a receiving end (13) facing away from the front face (9), wherein
- the cross-section of the receptacle recess (5) decreases behind the receiving end (13), wherein
- the housing body (3) is manufactured in one piece using a metal powder injection moulding process, wherein
- the housing body (3) ends along the longitudinal extension at a distance of at most 1.15 mm behind the receiving end (13), wherein
- the housing body (3) has a length of at most 7.8 mm along the longitudinal extension, wherein
- the housing body (3) has a rear wall (19) behind the receiving end (13), which is oriented transversely to the longitudinal extension, wherein the rear wall (19) has a wall thickness of at most 0.8 mm, wherein the housing body has the rear wall at a distance of at most 0.4 mm from the receiving end (13) measured in the longitudinal direction, and wherein the rear wall has a wall thickness that is constant along its height.

2. Housing (1) according to claim 1, **characterised in that** the receptacle recess (5) behind the receiving end (13) is bounded in the longitudinal direction by an inner wall (25) which forms an angle of at least 88° to at most 92° with the longitudinal extension.

3. Housing (1) according to one of the preceding claims, **characterised in that** the rear wall (19) is oriented perpendicular to the longitudinal extension.

4. Housing (1) according to one of the preceding claims, **characterised in that** the housing (1) has a front wall (27) on the front face (9) with two openings (11) which communicate with the receptacle recess (5), wherein a front wall centre section (29) is arranged between the two off-centre openings (11), which is designed as an abutment for the spring hinge mechanism (7).

5. Housing (1) according to one of the preceding claims, **characterised in that** an outer surface (31) of a ceiling wall (21) of the housing body (3) slopes downwards from the front face (9) in the direction of the longitudinal extension of the housing body (3).

6. Housing (1) according to one of claims 1 to 3 or 5, **characterised in that** the receptacle recess (5) is open on the front face

7. Housing (1) according to one of the preceding claims, **characterised in that** the housing body (3) has a central recess (33) on the front face (9), in the area of which an injection point for the manufacture of the housing body (3) is arranged.

8. Spectacle part, with a housing (1) according to one of claims 1 to 7, wherein the housing body (3) is preferably attached to the spectacle part
a) by laser welding, or
b) by soldering.

9. Spectacle part according to claim 8, **characterised in that** the housing body (3) is attached to the spectacle part by laser welding, wherein laser welds are formed only on side walls (17), or only on side walls (17) and on the rear wall (19) of the housing body (3).

10. Spectacles, with at least one spectacle part according to one of claims 8 or 9.

## Revendications

1. Logement (1) pour une charnière à ressorts de lunettes, avec
- un corps de logement (3) qui présente une cavité de réception (5) pour recevoir un mécanisme de charnière à ressorts (7) dans la cavité de réception (5), dans lequel
- le logement (1) présente sur une face avant (9) du corps de logement (3) au moins une ouverture (11) communiquant avec la cavité de réception (5), dans lequel
- la cavité de réception (5) présente une section transversale correspondant à la disposition du mécanisme de charnière à ressorts (7) le long d'une extension longitudinale du corps de logement (3), depuis l'au moins une ouverture (11) jusqu'à une extrémité de réception (13) tournée vers la face avant (9), dans lequel
- la section transversale de la cavité de réception (5) se réduit derrière l'extrémité de réception (13), dans lequel
- le corps de logement (3) est construit d'une seule pièce par un procédé de moulage par injection de poudre métallique, dans lequel
- le corps de logement (3) se termine le long de l'extension longitudinale à une distance de maximum 1,15 mm derrière l'extrémité de réception (13), dans lequel
- le corps de logement (3) présente le long de l'extension longitudinale une longueur de maximum 7,8 mm, dans lequel
- le corps de logement (3) présente une paroi arrière (19) derrière l'extrémité de réception (13), qui est orientée perpendiculairement à l'extension longitudinale, la paroi arrière (19) présentant une épaisseur de paroi de maximum 0,8 mm, la paroi arrière du corps de logement présentant un intervalle mesuré dans une direction longitudinale de maximum 0,4 mm depuis l'extrémité de réception (13), et la paroi arrière présentant une épaisseur de paroi constante le long de sa hauteur.

2. Logement (1) selon la revendication 1, **caractérisé en ce que** la cavité de réception (5) derrière l'extrémité de réception (13) est limitée en direction longitudinale par une paroi interne (25) qui inclut un angle avec l'extension longitudinale de minimum 88° à maximum 92°.

3. Logement (1) selon l'une des revendications précédentes, **caractérisé en ce que** la paroi arrière (19) est orientée perpendiculairement à l'extension longitudinale.

4. Logement (1) selon l'une des revendications précédentes, **caractérisé en ce que** le logement (1) présente sur sa face avant (9) une paroi avant (27) avec deux ouvertures (11) communiquant avec la cavité de réception (5), dans lequel entre les deux ouvertures (11) disposées excentrées est disposée une section médiane de la paroi avant (29) qui est constituée comme butée pour le mécanisme de charnière à ressorts (7).

5. Logement (1) selon l'une des revendications précédentes, **caractérisé en ce que** la surface externe (31) d'une paroi supérieure (21) du corps de logement (3) descende de la face avant (9) en direction de l'extension longitudinale du corps de logement (3).

6. Logement (1) selon l'une des revendications 1 à 3 ou 5, **caractérisé en ce que** la cavité de réception (5) est ouverte à l'avant.

7. Logement (1) selon l'une des revendications précédentes, **caractérisé en ce que** le corps de logement (3) présente un renfoncement central (33) sur sa face avant (9), dans la zone duquel est disposé un point d'injection pour la fabrication du corps de logement (3).

8. Pièce d'une paire de lunettes avec un logement (1) selon l'une des revendications 1 à 7, le corps de logement (3) étant fixé de préférence à la pièce de paire de lunettes
a) par soudure au laser, ou
b) par brasage.

9. Pièce d'une paire de lunettes selon la revendication 8, **caractérisé en ce que** le corps de logement (3) est fixé à la pièce de paire de lunettes par soudure au laser, la couture de soudure laser n'étant présente que sur des parois latérales (17) ou que sur des parois latérales (17) et la paroi arrière (19) du corps de logement (3).

10. Paire de lunettes avec au moins une pièce de paire de lunettes selon l'une des revendications 8 ou 9.
